(19) Europäisches Patentamt
European Patent Office
Office européen des brevets

(11) Publication number: 0 033 393 A2

# (12) EUROPEAN PATENT APPLICATION

(21) Application number: 80108177.9

(22) Date of filing: 23.12.80

(51) Int. Cl.[3]: C 08 L 67/02
C 08 L 63/00

(30) Priority: 27.12.79 US 107795

(43) Date of publication of application: 12.08.81 Bulletin 81/32

(84) Designated Contracting States: DE FR GB IT NL

(71) Applicant: GAF CORPORATION
140 West 51st Street
New York New York 10020(US)

(72) Inventor: Charles, John J.
21 Treetop Court
Bloomingdale New Jersey, 07403(US)

(72) Inventor: Coleman, Ernest A.
16 Derrygally Cicle
Kinnelon New Jersey, 07405(US)

(74) Representative: Schmied-Kowarzik, Volker, Dr.
Patentanwälte Dr. V. Schmied-Kowarzik et al,
Dipl.-Ing. G. Dannenberg Dr. P. Weinhold, Dr. D. Gudel
Dipl.-Ing. S. Schubert Siegfriedstrasse 8
D-8000 München(DE)

## (54) Polyester molding composition and product.

(57) Polyester molding compositions comprising a blend of poly ($C_2$-$C_4$ alkylene terephthalate) with a diepoxy compound, a multiphase composite polymer, and poly ($C_2$-$C_4$ alkylene terephthalate-co-alkylene oxide) are disclosed. The multiphase polymer has a first elastomeric phase polymerized from a monomer system including $C_1$-$C_6$ alkyl acrylate as well as crosslinking and graft-linking monomers and final rigid thermoplastic phase polymerized in the presence of the elastomeric phase.

EP 0 033 393 A2

FDN-1246



# POLYESTER MOLDING COMPOSITION AND PRODUCT

Poly ($C_2$-$C_4$ alkylene terephthalate) such as polyethylene terephthalate (PET) or polybutylene terephthalate (PBT) are well known resins for a number of uses including molding applications. Such resins are frequently blended with various additives to improve properties such as impact strength, resistance to warping, flame resistance, thermal stability etc. U.S. Patent 4,096,202 and U.S. Patent 4,034,013 describe certain impact modifiers which have been suggested for use with polyalkylene terephthalates. U.S. Patent 4,010,219 describes certain epoxy compounds which have been suggested for use in imparting improved tensile properties to polybutylene terephthalate molding compounds. The use of poly ($C_2$-$C_4$ alkylene terephthalate-co-alkylene oxide) as a molding composition is also known and is described for instance in U.S. Patent 3,835,098.

It is an object of the present invention to provide improved polyester compositions suitable for the production of molded articles as well as molded articles of such compositions. As compared with known prior art compositions, molded articles of the invention have a combination of desirable properties including improved impact strength without sacrifice of other desirable properties.

Polyester molding composition of the invention comprises a blend of:

(a) at least about 40 weight percent poly ($C_2$-$C_4$ alkylene terephthalate) having an intrinsic viscosity (I.V.) between about 0.5 and about 1.5 deciliters per gram (dl/g);

(b) between about 0.1 and about 15 weight % based on poly ($C_2$-$C_4$ alkylene terephthalate) of a diepoxy compound represented by the general formula:

Formula I 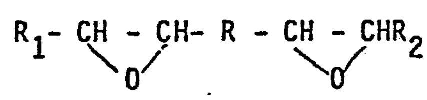

wherein $R_1$ and $R_2$ represent hydrogen, alkyl, cycloalkyl, aryl, or aralkyl, and $R_1$ and $R_2$ may be bonded to each other, and R represents alkylene, cycloalkylene, arylene, alkarylene or aralkylene, each of which may optionally have an ether group and/or an ester group, and R may be optionally bonded to $R_1$ and/or $R_2$;

(c) between about 10 and about 50 weight % based on poly ($C_2$-$C_4$ alkylene terephthalate) of a multiphase composite polymer comprising;

(1) about 25 to about 95 weight percent of a first

elastomeric phase polymerized from a monomer system comprising about 75 to 99.8% by weight $C_1$ to $C_6$ alkyl acrylate, 0.1 to to 5% by weight crosslinking monomer, and 0.1 to 5% by weight graftlinking monomer, said crosslinking monomer being a polyethylenically unsaturated monomer having a plurality of addition polymerizable reactive groups all of which polymerize at substantially the same rate of reaction, and said graftlinking monomer being a polyethylenically unsaturated monomer having a plurality of addition polymerizable reactive groups, at least one of which polymerizes at a substantially different rate of polymerization from at least one other of said reactive groups; and

(2) about 75 to 5 weight % of a final, rigid thermoplastic phase polymerized in the presence of said elastomeric phase; and (3) between about 5 and about 40 wt% based on total molding composition of poly ($C_2$-$C_4$ alkylene terephthalate-co-alkylene oxide) having a Shore D hardness between about 50 and about 60 and a melt index between about 7 and about 9.

In preferred embodiments the poly ($C_2$-$C_4$ alkylene terephthalate) comprises at least about 50 weight percent (wt%) polybutylene terephthalate (PBT) and preferably has an intrinsic viscosity between about 1.0 and about 1.5 deciliters per gram (dl/g) as determined in orthochlorophenol at $25^{o}$ C. Further preferred embodiments involve the use of glass reinforcing fibers in amounts between about 1 and about 100 weight percent based on polyalkylene terephthalate as well as preferred multiphase polymer, poly ($C_2$-$C_4$ alkylene terephthalate-co-alkylene oxide) and diepoxy compounds as described below.

Polyalkylene terephthalates suitable for use in the invention include for instance polyethylene terephthalate, polypropylene terephthalate, and polybutylene terephthalate. Polybutylene terephthalate (PBT) is especially suitable and in a preferred embodiment of the invention comprises at least about 50 weight percent of the polyalkylene terephthalate used. The polyalkylene terephthalate used may be a single polyalkylene terephthalate or a blend of suitable polyalkylene terephthalates. As mentioned the composition of the invention includes at least about 40 weight percent poly ($C_2$-$C_4$ alkylene terephthalate). An especially preferred poly ($C_2$-$C_4$ alkylene terephthalate) comprises at least about 50 weight percent PBT having an intrinsic viscosity between about 1.0 and about 1.5 dl/g.

The diepoxy compound present in compositions of the invention is present in amounts between about 0.1 and about 15 weight percent based on poly ($C_2$-$C_4$ alkylene terephthalate) and is represented by the general formula I above:

Suitable diepoxy compounds which may be used in the practice of this invention include polycondensates of epihalohydrin such as epichlorohydrin with a diol, preferably having up to 15 carbon atoms, such as diphenylolpropane (so called bisphenol "A") in any ratio, bis-(2,3-epoxypropanol)-esters obtained by esterification of dicarboxylic acids, preferably having up to 15 carbon atoms, such as terephthalic acid, phthalic acid, 2,6-napthalene-dicarboxylic acid, adipic acid, succinic acid and dodecane dicarboxylic acid with 2,3-epoxypropanol, and cycloaliphatic diepoxides, preferably having 5-15 carbon atoms, such as cyclooctadiene-(1,5)-diepoxide, 1,2,5,6-diepoxy cyclododecane-(9), bicycloheptadiene diepoxide, and

dicylopentadiene diepoxide. A suitable diepoxy compound for use in the invention is for instance, a bisphenol A diglycidyl ether of formula II where n is normally zero.

The multiphase composite polymer used in compositions of the invention comprises from about 25 to about 95 weight percent of a first elastomeric phase and about 75 to 5 weight percent of a final rigid thermoplastic phase. One or more intermediate phases are optional, for example a middle stage polymerized from about 75 to 100 percent by weight styrene. The first stage is polymerized from about 75 to 99.8 weight percent $C_1$ to $C_6$ acrylate resulting in an acrylic rubber core having a glass transition temperature below about $10^oC$ and crosslinked with 0.1 to 5 weight percent crosslinking monomer and further containing 0.1 to 5 percent by weight graftlinking monomer. The preferred alkyl acrylate is butyl acrylate. The crosslinking monomer is a polyethylenically unsaturated monomer having a plurality of addition polymerizable reactive groups all of which polymerize at substantially the same rate of reaction. Suitable crosslinking monomers include poly acrylic and poly methacrylic esters of polyols such as butylene

FDN-1246



Formula II

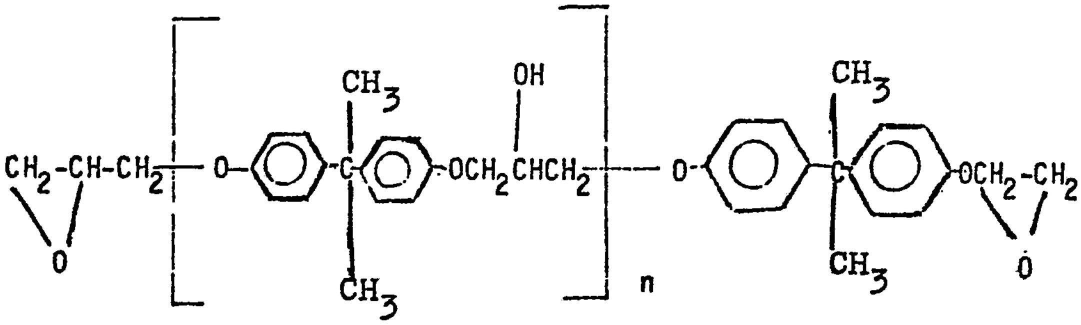

diacrylate and dimethacrylate, trimethylol propane trimethacrylate, and the like; di- and trivinyl benzene, vinyl acrylate and methacrylate, and the like. The preferred crosslinking monomer is butylene diacrylate. The graftlinking monomer is a polyethylenically unsaturated monomer having a plurality of addition polymerizable reactive groups, at least one of which polymerizing at a substantially different rate of polymerization from at least one other of said reactive groups. The function of the graftlinking monomer is to provide a residual level of unsaturation in the elastomeric phase, particularly in the latter stages of polymerization and, consequently, at or near the surface of the elastomer particles. When the rigid thermoplastic phase is subsequently polymerized at the surface of the elastomer, the residual unsaturated addition polymerizable reactive group contributed by the graftlinking monomer participates in the subsequent reaction so that at least a portion of the rigid phase is chemically attached to surface of the elastomer. Among the effective graftlinking monomers are allyl group-containing monomers of allyl esters of ethylenically unsaturated acids such as allyl acrylate, allyl methacrylate, diallyl maleate, diallyl fumarate, diallyl itaconate, allyl acid maleate, allyl acid fumarate, and allyl acid itaconate. Somewhat less preferred at the diallyl esters of polycarboxylic acids which do not contain polymerizable unsaturation. The preferred graftlinking monomers are allyl methacrylate and diallyl maleate. A most preferred interpolymer has only two stages, the first stage comprising about 60 to 95 percent by weight of the interpolymer and being polymerized from a monomer system comprising 95 to 99.8 percent by weight butyl acrylate, 0.1 to 2.5 percent by weight butylene diacrylate as

crosslinking agent, 0.1 to 2.5 percent by weight allyl methacrylate or diallyl maleate as a graftlinking agent, with a final stage polymerized from bout 60 to 100 percent by weight methyl methacrylate.

The final stage monomer system can be comprised of $C_1$-$C_{16}$ methacrylate, styrene, acrylonitrile, alkyl acrylates, allyl methacrylate, diallyl methacrylate, and the like, as long as the overall glass transition temperature is at least about 20$^{o}$C. Preferably the final stage monomer system is at least about 50 weight percent $C_1$ to $C_4$ alkyl methacrylate. It is further preferred that the final stage polymer be free of units which tend to degrade poly(alkylene terephthalates), for example acid, hydroxyl, amino, and amide groups.

For further descriptions and examples of various multiphase polymers and diepoxy compounds suitable for use in the present invention, reference may be had to the aforementioned U.S. Patents 4,010,219 and 4,096,202 the disclosures of which are incorporated herein by reference. Additional examples of multiphase polymers suitable for use in the invention may be found in U.S. Patent 4,034,013 the disclosure of which is also incorporated herein by reference.

Preferred poly ($C_2$-$C_4$ alkylene terephthalate-co-alkylene oxide) for use in the invention in poly(butylene terephthalate-co-tetramethylene oxide). Suitable poly ($C_2$-$C_4$ alkylene terephthalate-co-alkylene oxide) elastomers and their preparation are well known as described for instance in U.S. Patent 3,766,146.

Compositions and products of the invention may also contain up to about 25 weight percent based on total composition of suitable flame retardant additives and may contain relatively minor amounts of other materials which do not unduly effect the desired characteristics of finished products. Such additional

materials may, depending upon the particular compositions employed and products desired include for instance, colorants or lubricants. Where present such additional materials other than flame retardants or filler 5 normally comprise not more than about 10 weight percent of the total molding composition or finished product.

Compositions and products of the invention may also include reinforcing fibers or inert filler of conventional types and amounts. In a preferred embodiment between about 5 and about 10 100 weight percent based on polyalkylene terephthalate of glass reinforcing fibers is present. Inert filler material where used is normally present in amounts between about 10 and about 100 weight percent based on polyalkylene terephthalate and may include such conventional materials as glass spheres, clay, mica, talc, silica, silicates, oxides, etc.

In preparing compositions of the invention the various ingredients may be prepared by conventional methods and blended in any suitable manner such as by dry blending or melt blending, blending in extruders, heated rolls, or other types of mixers. Conventional master batching techniques are well known in the art and need not be described in detail here.

The following example is intended to illustrate the invention without limiting the scope thereof. In the example all quantities are given in terms of weight percent based on total compositions unless otherwise stated.

In the example the term "epoxy" designates an epoxy compound of Formula II. The term "latex" designates a multiphase composite polymer containing about 71 weight percent butylacrylate, about 24 weight percent methyl methacrylate, and 3 weight percent glycidyl methacrylate, and about 2 weight percent styrene. The term "Hytrel" designates poly(butylene terephthalate-co-tetramethylene oxide) having a Shore D hardness

of 55 and a melt index of 7. Antioxidants referred to are identified as follows:

Antioxidant A = tetrakis [methylene 3-(3',5'-ditert-butyl-4'-hydroxy phenyl)propionate] methane

Antioxidant B = o,o-di-n-octadecyl-3,5-di-tert-butyl-4-hydroxybenzyl phosphonate

Antioxidant C = 4,4'-bis(alpha dimethyl benzyl)diphenyl amine

The lubicant used was ethylene bis-stearamide. Fiberglass used was OCF K419AA having diameters between about 5 and about 15 microns and a fiber length of about 5 mm.

EXAMPLE 1

For this example a number of compositions were prepared utilizing PBT and additional components as indicated in Table I below. Samples of these compositions were injection molded to produce standard ASTM test specimens. Specimens were then tested for notched and unnotched Izod impact strength in accordance with ASTM procedure D-256.

The compositions shown in Table I were compounded on a Midland Ross 1.5 inch extruder using the following conditions: temperature 240-270$^{0}$C, pressure 0-2000 psi, amperage 10-30 and screw RPM 75-150. In each case the pelletized extrudate was then molded on a reciprocating screw injection molding machine to provide test specimens. Compositions tested and impact strengths of resulting test specimens are shown in Table I.

TABLE I

| Example | 1 | 2 | 3 | 4 | 5 | 6 | 7 | 8 | 9 | 10 | 11 |
|---|---|---|---|---|---|---|---|---|---|---|---|
| 0.8 I.V. PBT | 100 | - | - | 71.6 | - | - | 70 | - | - | - | 5.25 |
| 1.2 I.V. PBT | | 100 | 71.6 | - | 71.6 | 57.5 | - | 70 | 50.12 | 50.7 | 35 |
| Latex | | | 20 | 20 | 20 | 20 | | | 14 | 14 | 14 |
| Hytrel | | | 7.5 | 7.5 | 7.5 | 7.5 | | | 5.25 | 5.25 | 5.25 |
| Epoxy | | | 0.5 | 0.5 | 0.5 | 0.5 | | | 0.35 | 0.35 | 0.35 |
| Antioxidant A | | | 0.3 | 0.3 | - | - | | | 0.2 | - | - |
| Antioxidant B | | | 0.3 | | - | - | | | 0.2 | - | - |
| Antioxidant C | | | 0.3 | 0.3 | - | - | | | 0.2 | - | - |
| Lubricant | | | 0.4 | 0.4 | 0.4 | 0.4 | 0.4 | 0.4 | 0.4 | 0.4 | 0.4 |
| Fiberglass | | | - | - | - | - | 30 | 30 | 30 | 30 | 30 |
| Polycarbonate | | | - | - | - | 7.5 | - | | - | - | 5.25 |

IMPACT PROPERTIES

| Impact, | | | | | | | | | | | |
|---|---|---|---|---|---|---|---|---|---|---|---|
| notched | 0.7 | 1.0 | 17.2 | 2.3 | 16.2 | 18.4 | 1.7 | 2.3 | 4.3 | 3.7 | 4.1 |
| unnotched | 40 | 42 | 39.8 | 36.4 | 40.1 | 40.4 | 12 | 16.0 | 17.2 | 15.6 | 16.2 |

CLAIMS:

1. Polyester molding composition comprising a blend of:

a) at least about 40 weight percent poly ($C_2$-$C_4$ alkylene terephthalate) having an intrinsic viscosity between about 0.5 and about 1.5 deciliters per gram;

b) between about 0.1 and about 5 weight % based on poly ($C_2$-$C_4$ alkylene terephthalate) of diepoxy compound represented by the general formula:

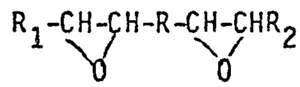

wherein $R_1$ and $R_2$ represent hydrogen, alkyl, cycloalkyl, aryl, or aralkyl, and $R_1$ and $R_2$ may be bonded to each other, and R represents alkylene, cycloalkylene, arylene, alkarylene or aralkylene, each of which may optionally have an ether group and/or an ester group, and R may be optionally bonded to $R_1$ and/or $R_2$;

c) between about 10 and about 50 weight % based on poly ($C_2$-$C_4$ alkylene terephthalate) of a multiphase composite polymer comprising:

1) about 25 to about 95 weight percent of a first elastomeric phase polymerized from a monomer system comprising about 75 to 99.8% by weight $C_1$ to $C_6$ alkyl acrylate, 0.1 to 5% by weight crosslinking monomer, and 0.1 to 5% by weight graftlinking monomer, said crosslinking monomer being a polyethylenically unsaturated monomer having a plurality of addition polymerizable reactive groups of which polymerize at substantially the same rate of reaction, and said graftlinking monomer being a polyethylenically unsaturated monomer having

a plurality of addition polymerizable reactive groups, at least one of which polymerizes at a substantially different rate of polymerization from at least one other of said reactive groups; and

2) about 75 to 5 weight percent of a final, rigid thermoplastic phase polymerized in the presence of said elastomeric phase; and

d) between about 5 and about 40 wt% based on total molding composition of poly ($C_2$-$C_4$ alkylene terephthalate-co-alkylene oxide) having a Shore D hardness between about 50 and about 60 and a melt index between about 7 and about 9.

2. Composition according to Claim 1 wherein the poly ($C_2$-$C_4$ alkylene terephthalate) comprises at least about 50 weight percent poly(butylene terephthalate) having an intrinsic viscosity between about 1.0 and about 1.5 dl/g.

3. Composition according to Claims 1 or 2 which also contains between about 5 and about 100 weight percent based on poly(alkylene terephthalate) of glass reinforcing fibers.

4. Composition according to any of Claims 1 - 3 wherein the final rigid thermoplastic phase of the multiphase polymer contains epoxy groups derived from glycidyl acrylate or glycidyl methacrylate.

5. Composition according to any of Claims 1 - 4 wherein said graftlinking monomer is allyl methacrylate or diallyl maleate and wherein the crosslinking monomer is butylene diacrylate.

6. Composition according to any of Claims 1 - 5 wherein the final rigid thermoplastic phase of the multiphase polymer is polymerized from a monomer system comprising from about 50 to 100 weight percent of a $C_1$ to $C_4$ alkyl methacrylate, the final phase monomer system is free of acid, hydroxyl, amino and amide groups and wherein the glass transition temperature of the final thermoplastic phase is at least about $20^oC$.

7. Composition according to any of Claims 1 - 6 wherein said first phase of the multiphase polymer comprises between about 60 and about 95 weight percent of said multiphase polymer, said first phase is polymerized from a monomer system comprising between 95 and about 99.8 percent by weight butyl acrylate, between about 0.1 and about 2.5 weight percent butylene diacrylate as a crosslinking agent, and between about 0.1 and about 2.5 weight percent allyl methacrylate or diallyl maleate as a graftlinking agent and said final phase of said multiphase polymer is polymerized from about 60 to 100 weight percent methyl methacrylate.

8. Composition according to any of Claims 1 - 7 wherein the diepoxy compound is selected from the group consisting of polycondensates of epihalohydrin with diol, bis-(2,3-epoxy propanol)-esters which are the product of esterification of dicarboxylic acid with 2,3-epoxypropanol, and cycloaliphatic diepoxides.

9. Composition according to any of Claims 1 - 8 wherein the diepoxy compound is selected from the group consisting of polycondensates of epichlorohydrin with diphenololpropane and the poly($C_2$-$C_4$ alkylene terephthalate-co-alkylene oxide) is poly(butylene terephthalate-co-tetramethylene oxide).

10. Composition according to any of Claims 1 - 9 wherein the diepoxy compound is selected from the group consisting of polycondensates of ephialohydrin with diol, bis-(2,3-epoxy propanol)-esters which are the product of esterification of dicarboxylic acid with 2,3-epoxypropanol, and cycloaliphatic diepoxides, wherein the first phase of the multiphase polymer comprises between about 60 and about 95 weight percent of said multiphase polymer, said first phase is polymerized from a monomer system comprising between 95 and 99.8 percent by weight butyl acrylate, between about 0.1 and about 2.5 weight percent butylene diacrylate as a crosslinking agent, said final phase of said multiphase polymer is polymerized from about 60 to 100 weight percent methyl methacrylate, said poly ($C_2$- $C_4$ alkylene terephthalate-co-alkylene oxide) is poly(butylene terephthalate-co-tetramethylene oxide), and the poly ($C_2$-$C_4$ alkylene terephthalate is essentially polybutylene terephthalate having an I.V. between about 1.0 and about 1.5 dl/g.